# EUROPEAN PATENT APPLICATION

(11) **EP 4 140 622 A1**
(43) Date of publication of application: **01.03.2023**
(21) Application number: 22191180.3
(22) Date of filing: 19.08.2022
(51) Int. Cl.: B22F 10/28, B22F 10/37, B33Y 10/00, B33Y 30/00, B29C 64/153, B29C 64/205, B22F 12/37

(54) **FLUIDIZED BED ADDITIVE MANUFACTURING**

(30) Priority: 30.08.2021 US 202117460940
(71) Applicant: Collins Engine Nozzles, Inc., West Des Moines, IA 50265 (US)
(72) Inventor: RYON, Jason, Carlisle, IA (US); GREENFIELD, Jacob, Granger, IA (US)
(74) Representative: Dehns

(57) **Abstract**

A fluidized powder additive manufacturing system can include a container (101) defining a powder volume (103) configured to hold a powder (105), a fluidizer (107) attached to and/or disposed on or within the container, the fluidizer configured to fluidize the powder within the powder volume to form a fluidized powder, and a build area assembly (109) disposed within the container. The build area assembly can include a build surface (111), and a movement system (115) attached to the build surface and configured to move the build surface within the powder volume when the powder is fluidized.

## Description

### FIELD

This disclosure relates to additive manufacturing.

### BACKGROUND

Additive manufacturing with powder bed fusion has some limitations in that the powder is usually rolled, packed, or wiped to achieve a uniform top layer. However, these methods sometimes leave non-uniformities (e.g., streaks within the build layer), and disruptions from previous build layers can transmit to subsequent layers. Additionally, build direction is fixed and can lead to non-ideal overhang angles. Traditional methods provide only a single build direction, compared to a direct energy deposition which has more orientation options.

Such conventional methods and systems have generally been considered satisfactory for their intended purpose. However, there is still a need in the art for improved additive manufacturing methods and systems. The present disclosure provides a solution for this need.

### SUMMARY

A fluidized powder additive manufacturing system can include a container defining a powder volume configured to hold a powder, a fluidizer attached to and/or disposed on or within the container, the fluidizer configured to fluidize the powder within the powder volume to form a fluidized powder, and a build area assembly disposed within the container. The build area assembly can include a build surface, and a movement system attached to the build surface and configured to move the build surface within the powder volume when the powder is fluidized.

The system can include a control module configured to control the fluidizer to fluidize the powder to allow movement of the build surface within the fluidized powder and/or to smooth or recoat a top surface of the powder. The control module can be configured to control the movement system while activating the fluidizer to position the build surface within the powder volume while the powder is fluidized.

The system can include an energy applicator in optical communication with the container to provide energy to the top surface of the powder when the powder is within the powder volume. The control module can be configured to control the energy applicator to apply energy to the top surface of the powder after positioning the build surface within the powder volume to form a first layer attached to the build surface.

The control module can be configured to successively reposition the build surface while activating the fluidizer to position the build surface within the powder volume while the powder is fluidized, and to control the energy applicator to apply energy to the top surface of the powder after each repositioning the build surface within the powder volume to form successive layers attached to the first layer. The control module can be configured to position the build surface at a depth beneath the top surface of the powder to define a layer thickness of a next layer, for example.

In certain embodiments, the movement system can include a piston for vertically controlling a position of the build surface to control a depth of the build surface in a fluidized powder. The movement system can include a positioner connected between the build surface and the piston to allow the build surface to pivot relative to the piston. The movement system can be configured to allow the build surface to be positioned and oriented in at least three axes within the powder volume.

In accordance with at least one aspect of this disclosure, a method of additive manufacturing can include fluidizing a powder to create fluidized powder, moving a build surface within the fluidized powder to a build position and/or depth of powder relative to a top surface of the powder, and applying energy to a surface of the powder to melt the powder and form a layer on the build surface or attached to an article that is attached to the build surface.

Fluidizing the powder can include continually fluidizing the powder during applying energy to the top surface of the powder. However, in certain embodiments, the method can include stopping fluidizing before applying energy to the top surface of the powder.

The method can include increasing fluidization during or after applying energy to the surface of the powder to increase convective heat transfer within the powder to provide a more uniform powder bed temperature. In certain embodiments, fluidizing the powder can include vibrating the powder at a first frequency to allow motion of the build surface within the powder. The method can further include vibrating the powder at a second frequency after moving the build surface to fluidize the powder and smooth the top surface of the powder for applying energy to the top surface of the powder.

The method can include reorienting the build surfaced in at least three axes within the powder after applying energy to build a part in at least a second build direction. In certain embodiments, the method can include temperature regulating (e.g., heating and/or cooling) the fluidized powder.

A non-transitory computer readable medium, comprising computer executable instructions configured to cause a computer to execute a method. The method can include any suitable method disclosed herein, e.g., as described above. In certain embodiments, the method can include activating a fluidizer to fluidize a powder in a powder volume to cause the powder to be in a fluidized state, and moving a build surface within the powder in the fluidized state to a build position.

The method can further include activating an energy applicator to apply energy to a top surface of the powder to fuse the powder to form a first layer attached to the build surface, activating the fluidizer or continuing to activate the fluidizer after deactivating the energy applicator, moving the build surface within the powder in the fluidized state to a second build position, activating the fluidizer or continuing to activate the fluidizer after moving the build surface to cause a top surface of the powder to be smooth, and activating the energy applicator to apply energy to the smooth top surface of the powder to fuse the powder to form a second layer attached to the first layer. The method can include, until an additively manufactured part is complete, successively activating the fluidizer or continuing to activate the fluidizer, then moving the build surface within the powder in the fluidized state to a next build position, then activating the fluidizer or continuing to activate the fluidizer after moving the build surface to the next build position to cause a top surface of the powder to be smooth, and then activating the energy applicator to apply energy to the smooth top surface of the powder to fuse the powder to form a next layer attached to a previous portion of a part being built.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a fluidized powder additive manufacturing system in accordance with this disclosure;
Fig. 2 is a flow diagram of an embodiment of a method in accordance with this disclosure;
Figs. 3A, 3B, 3C, 3D, 3E, 3F, 3G, 3H, 3I, and 3K collectively show an embodiment of a fluidized powder additive manufacturing system in accordance with this disclosure; and
Fig. 4 is a perspective view of an embodiment of an additively manufactured article in accordance with this disclosure.

### DETAILED DESCRIPTION

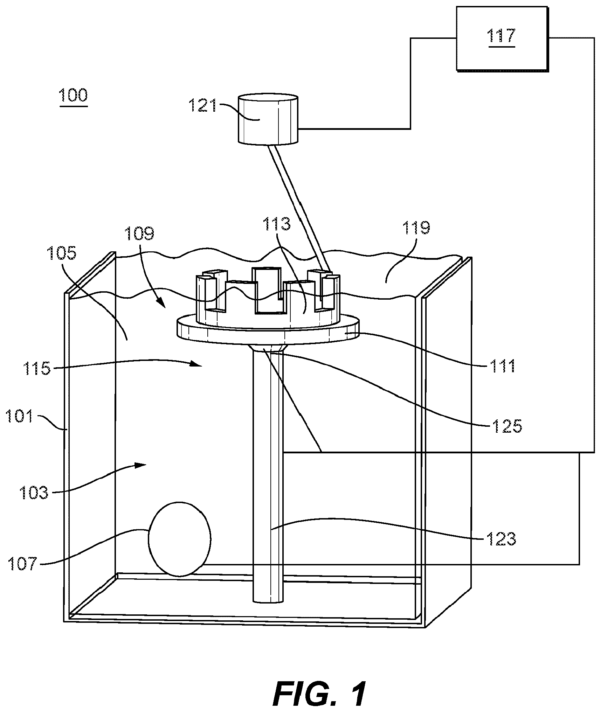

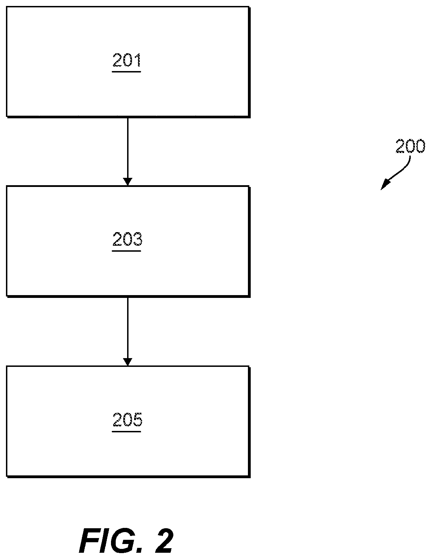

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-4. Certain embodiments described herein can be used to additively manufacture articles using a powder bed and without using support structure, for example.

Referring to Fig. 1, a fluidized powder additive manufacturing system 100 can include a container 101 defining a powder volume 103 configured to hold a powder 105 (e.g., any suitable powder for additive manufacturing is contemplated herein). The system 100 can include a fluidizer 107 (e.g., an ultrasonic transducer, a gas inlet, and/or electromagnetic device) attached to and/or disposed on or within the container 101. The fluidizer 101 is configured to fluidize the powder 105 within the powder volume 103 to form a fluidized powder (e.g., powder in a fluidized state that acts like a fluid). Any suitable fluidizer is contemplated herein. One having ordinary skill in the art appreciates, without undue experimentation, how to determine the appropriate fluidizing energy application (e.g., frequency of vibration, etc.) to a certain powder of a certain volume and material property (e.g., grain size, density, etc.).

The system 100 can also include a build area assembly 109 disposed within the container 101. The build area assembly 109 can include a build surface 111 (e.g., a build surface or other surface upon which a part 113 is built). The build area assembly 109 can also include a movement system 115 attached to the build surface 111 and configured to move the build surface 111 within the powder volume 103 when the powder is fluidized.

The system 100 can include a control module 117 configured to control the fluidizer 107 to fluidize the powder 105 to allow movement of the build surface 111 within the fluidized powder 105 and/or to smooth or recoat a top surface 119 of the powder 105. The control module 117 can be configured to control the movement system 115 while activating the fluidizer 107 to position the build surface 111 within (e.g., at least partially or entirely) the powder volume 103 while the powder 105 is fluidized. The control module 117 can include any suitable hardware and/or software module(s) configured to perform and function disclosed herein (e.g., as described above).

The system 100 can include an energy applicator 121 (e.g., a laser, an electron beam device, and/or any other suitable directed energy device) in optical communication with the container 101 to provide energy to the top surface 119 of the powder 105 when the powder 105 is within the powder volume 103. The control module 117 can be configured to control the energy applicator 117 to apply energy to the top surface 119 of the powder 105 after positioning the build surface 111 within the powder volume 103 to form a first layer attached to the build surface 111.

The control module 117 can be configured to successively reposition the build surface 111 while activating the fluidizer 107 to position the build surface 111 within the powder volume 103 while the powder 105 is fluidized, and to control the energy applicator 121 to apply energy to the top surface 119 of the powder 105 after each repositioning the build surface 111 within the powder volume 105 to form successive layers attached to the first layer. In certain embodiments, the build surface 111 can be repositioned within the powder volume 103, partially within the powder volume 103, or outside of the powder volume 103 with a portion of a part extending to and/or into the powder volume 103. Any suitable position (e.g., location and/or orientation) of the build surface 111 is contemplated herein.

The control module 117 can be configured to position the build surface 111 at a depth beneath the top surface 119 of the powder 105 to define a layer thickness of a next layer, for example. For example, each layer can be a same thickness, or layers can be made of variable thickness. The build surface 111 can be progressively pulled down into the powder volume 103 a set distance to define layers of a set thickness (e.g., 0.1 mm). The control module 117 can be configured to fluidize and/or otherwise vibrate the powder 105 to cause the top surface 119 to be smoothed before each layer is fused.

In certain embodiments, the movement system 115 can include a piston 123 for vertically controlling a position of the build surface 111 to control a depth of the build surface 111 in the fluidized powder 105. The movement system 115 can include a positioner 125 (e.g., a gimbal type connection) connected between the build surface 111 and the piston 123 to allow the build surface 111 to pivot relative to the piston 123. The movement system 115 can be configured to allow the build surface 111 to be positioned and oriented in at least three axes (e.g., three axes, four axes, five axes, six axes as in certain directed energy deposition devices) within (e.g., partially, fully, or otherwise) the powder volume 103. Any other suitable components and/or systems, and/or number of axes of motion (e.g., one, two) are contemplated herein.

Referring additionally to Fig. 2, in accordance with at least one aspect of this disclosure, a method 200 of additive manufacturing can include fluidizing a powder, e.g., at block 201, to create fluidized powder, and moving a build surface, e.g., at block 203, a within the fluidized powder to a build position and/or depth of powder relative to a top surface of the powder. The method 200 can also include applying energy, e.g., at block 205, to a surface of the powder to melt the powder and form a layer on the build surface or attached to an article that is attached to the build surface.

Fluidizing the powder can include continually fluidizing the powder during applying energy to the top surface of the powder. However, in certain embodiments, the method can include stopping fluidizing before applying energy to the top surface of the powder.

The method can include increasing fluidization during or after applying energy to the surface of the powder to increase convective heat transfer within the powder to provide a more uniform powder bed temperature. In certain embodiments, fluidizing the powder can include vibrating the powder at a first frequency to allow motion of the build surface within the powder. The method can further include vibrating the powder at a second frequency after moving the build surface to fluidize the powder and smooth the top surface of the powder for applying energy to the top surface of the powder.

The method can include reorienting the build surfaced in at least three axes within the powder after applying energy to build a part in at least a second build direction. In certain embodiments, the method can include temperature regulating (e.g., heating and/or cooling) the fluidized powder.

A non-transitory computer readable medium, comprising computer executable instructions configured to cause a computer to execute a method. The method can include any suitable method disclosed herein, e.g., as described above. In certain embodiments, the method can include activating a fluidizer to fluidize a powder in a powder volume to cause the powder to be in a fluidized state, and moving a build surface within the powder in the fluidized state to a build position.

The method can further include activating an energy applicator to apply energy to a top surface of the powder to fuse the powder to form a first layer attached to the build surface, activating the fluidizer or continuing to activate the fluidizer after deactivating the energy applicator, moving the build surface within the powder in the fluidized state to a second build position, activating the fluidizer or continuing to activate the fluidizer after moving the build surface to cause a top surface of the powder to be smooth, and activating the energy applicator to apply energy to the smooth top surface of the powder to fuse the powder to form a second layer attached to the first layer. The method can include, until an additively manufactured part is complete, successively activating the fluidizer or continuing to activate the fluidizer, then moving the build surface within the powder in the fluidized state to a next build position, then activating the fluidizer or continuing to activate the fluidizer after moving the build surface to the next build position to cause a top surface of the powder to be smooth, and then activating the energy applicator to apply energy to the smooth top surface of the powder to fuse the powder to form a next layer attached to a previous portion of a part being built.

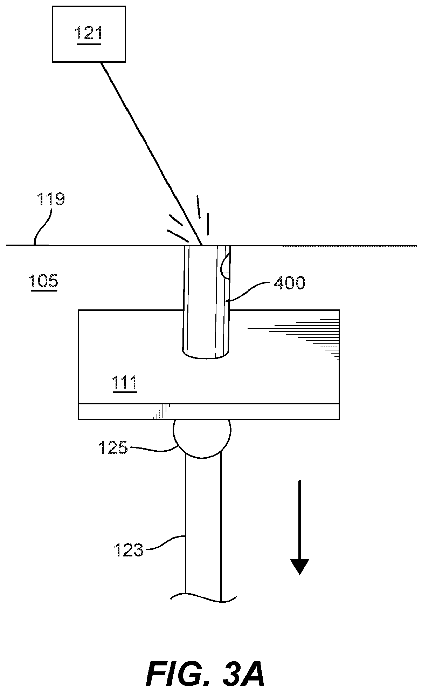

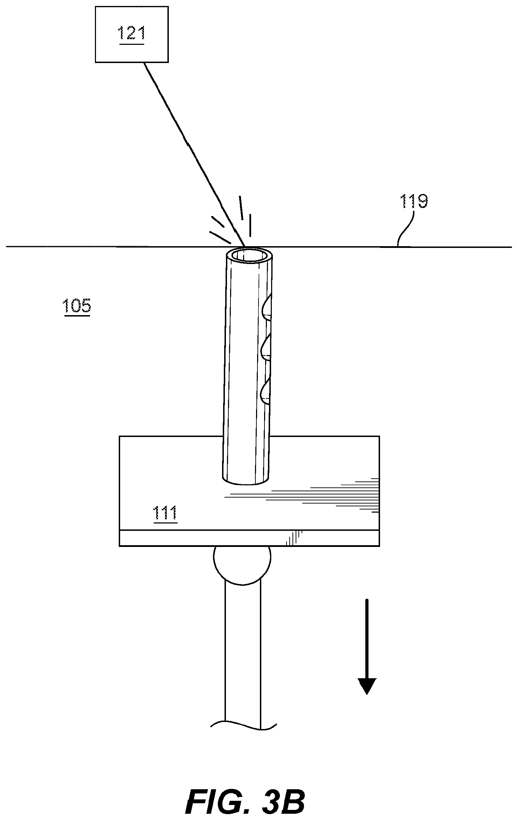

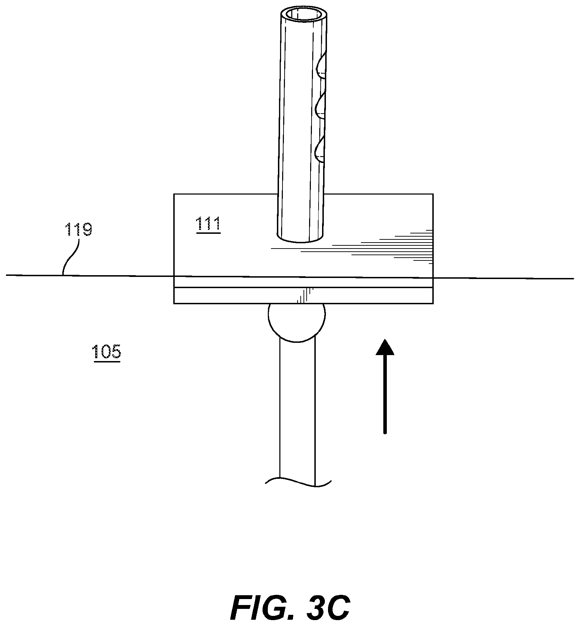

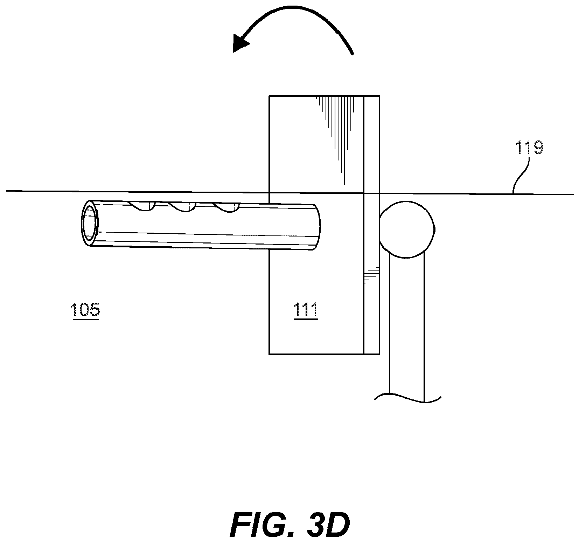

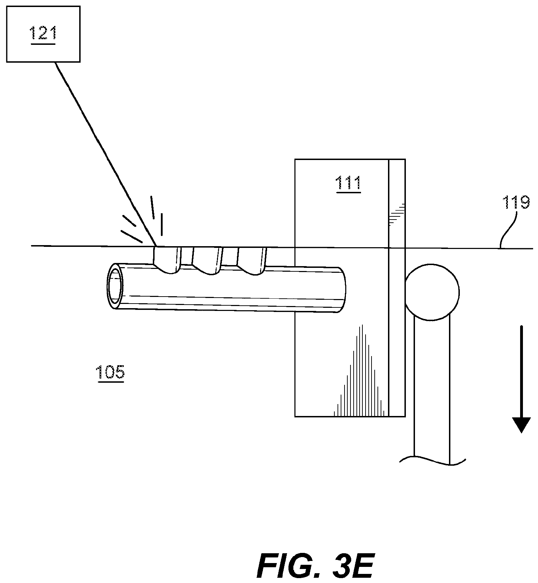

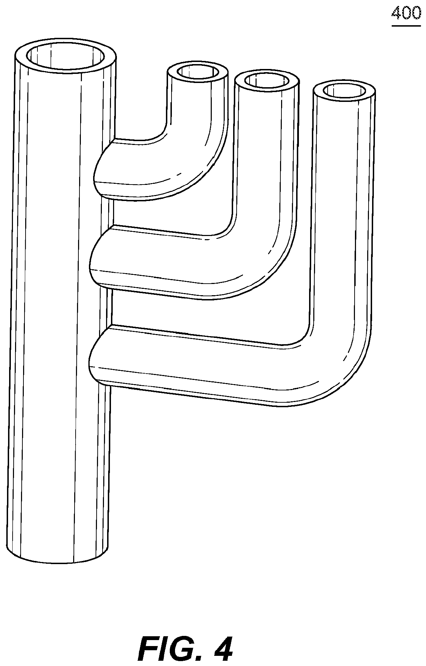

Referring additionally to Figs. 3A-3K, an example method of building an example part is demonstrated. The example part 400 is shown in Fig. 4. As shown in Fig. 3A, the part 400 can start being built in a first build direction (e.g., vertical as shown). The build surface 111 can be moved downward with each successive layer, e.g., as shown in Fig. 3B. Referring to Figs. 3C and 3D, the build surface 111 can be repositioned after completing a vertical portion (and/or suitably steep overhang) without using support structure. As shown in Fig. 3D and 3E, the build surface 111 can be positioned such that the part under build is positioned at a different angle (e.g., 90 degrees as shown) relative to the vertical direction, and can be positioned relative to the top surface 119 to allow fusing of the next layer to the vertical portion in a different build direction.

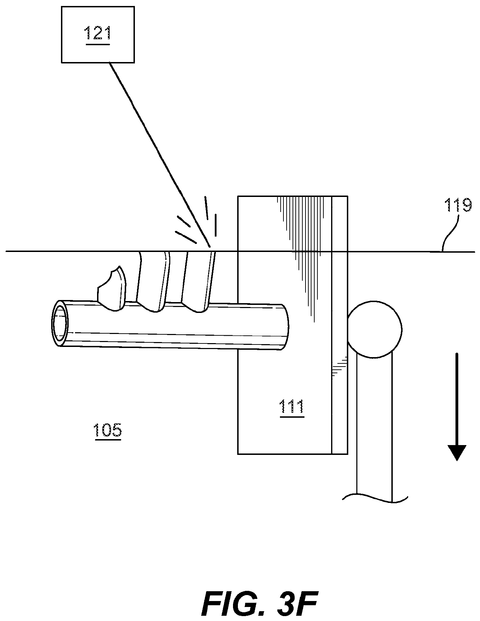

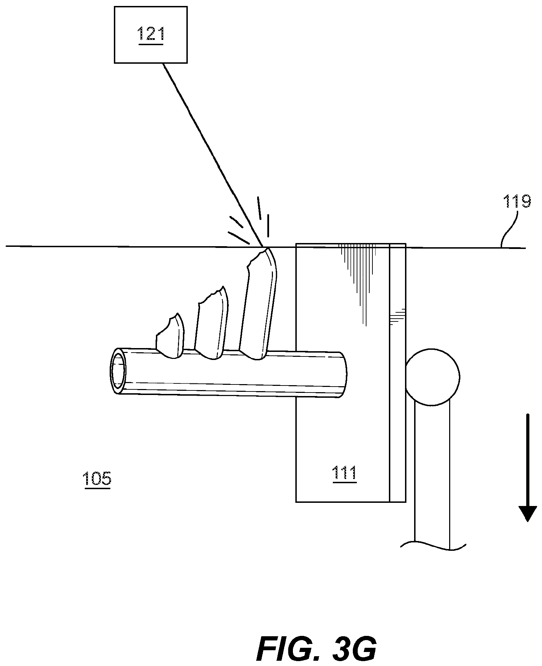

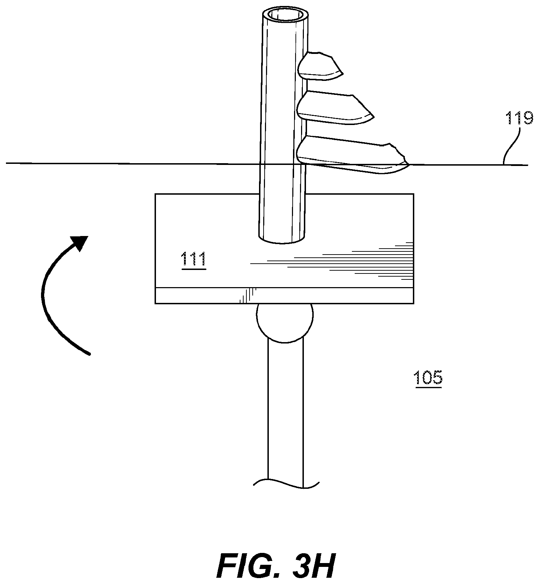

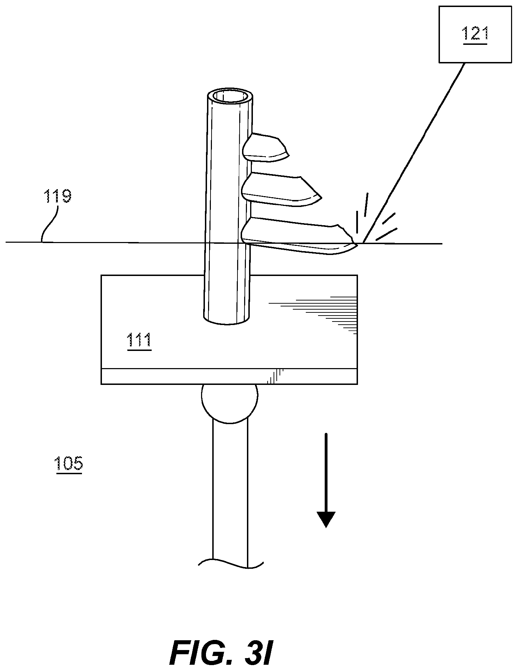

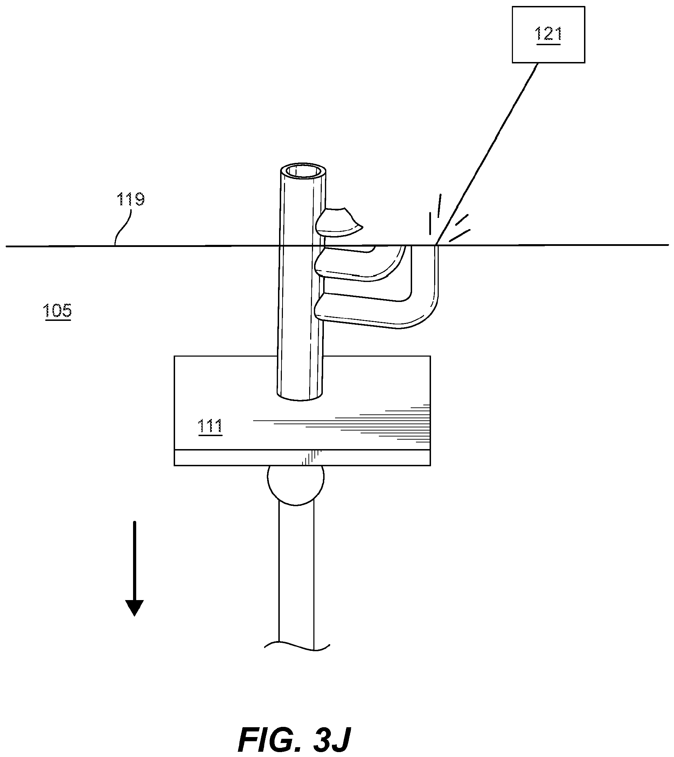

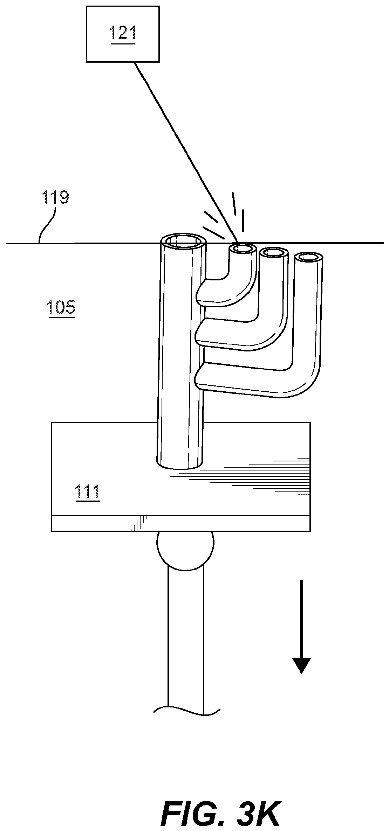

As shown in Figs. 3F and 3G, other features can be built attached to the vertical portion. These features would have presented an overhang if built in the orientation shown in Fig. 3A, for example, and may have required support structure (to the extent necessary or desired in fluidized powder bed fusion). However, building as shown can eliminate the need for support structure and can allow layer direction for each part portion to be selected as desired (e.g., for strength, smoothness, etc.). As shown in Figs. 3H, 3I, 3J, and 3K, the built plate 111 can be reoriented again if desired or needed. Unlike traditional powder bed manufacturing (which requires recoating using a roller or other device), in certain builds, the part being built can be pushed out of the powder at certain portions in order to continue the build sequence.

Figs. 2-3K show embodiments of a method and an embodiment of a build sequence. Any other suitable method and/or build sequence for any suitable part is contemplated herein.

Embodiments can include a method of additive manufacturing where a bed of powder is fluidized and includes a piston for anchoring the build part. The fluidized bed can be activated to create a smooth fluid of powder. The piston can be positioned so that the build layer is of adequate thickness. A laser can selectively melt the top powder layer, and the process can be repeated.

Embodiments can include a piston that does not have to be vertical only, but can also rotate and translate in multiple directions so that the selected laser area is located at the top of the fluidized bed. For example, for a 90 degree elbow piece, e.g., as shown in Fig. 4, one can start building vertically, tilt and/or rotate part as build progresses, and then continue to build.

Embodiments can optimize build direction for best growth orientation. Fluidization can occur continually, or intermittently to allow it to be stationary during laser steps. Fluidization can be caused in any suitable way (ultrasonic excitation, air induced fluidization, etc.). Fluidization of build during lasing may allow edge powder to not stick to weld pool. Fluidization can be increased to mix heat out between laser steps (e.g., to increase "convective" heat transfer and also have uniformity of powder bed temperature). A frequency of fluidization can be adjusted to be useful for certain steps (e.g., moving piston at a first frequency) and for smoothing timing (e.g., vibrating powder at a second frequency).

In certain embodiments, the piston and part can be submerged deeply into bed to allow powder to get into trapped pockets of the part. Fluidization can be increased to cover trapped pockets and then reduced again for lasing. Embodiments can actively heat/cool the fluidized powder bed to reduce thermal stresses in the final part.

Embodiments can start from existing part (e.g., a collet on piston such that the part is the build surface) so that part of the piece can be additively finished rather than building entire part. Embodiments can allows for multiple material properties (e.g., each portion of a part can be transferred between different powder beds or partially built with different powders. In certain embodiments, efficiency may be increased if it is just a simple part like a tube or flange for a starting point (e.g., which can be molded or cast).

Certain embodiments can include a honeycomb build plate to start from to help with powder getting into desired locations. Any suitable build surface (e.g., a build plate or other surface such as an existing part) is contemplated herein. Certain embodiments and/or build sequences can include a recoating step or roller step if powder packing is desired. Embodiments can utilize a laser or electron beam for melting, for example. For example, one or more lasers can be used to heat the power. Any suitable energy application method or system is contemplated herein (e.g., microwave, directed plasma).

In certain embodiments, powder may be reusable to start immediately with next parts. It is contemplated that in machine sieving can be implemented.

Embodiments can include a method of additive manufacturing where a bed of powder is fluidized. An anchoring point can be set (e.g., on a movable piston) and the position can be positioned so that the build laser is adequate thickness. Selective laser sintering can melt the powder and it cools to form an additive part layer. The process can be repeated by activating the fluidized bed and pulling the part down into the fluidized pool by a set layer amount. Embodiments can include any suitable extensions, such as multi-axis part manipulation within the fluidized bed to allow different build direction orientations. Embodiments can provide a novel additive manufacturing method to combine certain beneficial aspects of directed energy deposition (such as part orientation) with beneficial properties of powder bed fusion.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A fluidized powder additive manufacturing system, comprising:
a container (101) defining a powder volume (103) configured to hold a powder (105);
a fluidizer (107) attached to and/or disposed on or within the container, the fluidizer configured to fluidize the powder within the powder volume to form a fluidized powder; and
a build area assembly (109) disposed within the container, the build area assembly comprising:
a build surface (111); and
a movement system (115) attached to the build surface and configured to move the build surface within the powder volume when the powder is fluidized.

2. The system of claim 1, further comprising a control module (117) configured to control the fluidizer to fluidize the powder to allow movement of the build surface within the fluidized powder and/or to smooth or recoat a top surface of the powder.

3. The system of claim 2, wherein the control module is configured to control the movement system while activating the fluidizer to position the build surface within the powder volume while the powder is fluidized.

4. The system of claim 3, further comprising an energy applicator (121) in optical communication with the container to provide energy to the top surface (119) of the powder when the powder is within the powder volume, and optionally wherein the control module is configured to control the energy applicator to apply energy to the top surface of the powder after positioning the build surface within the powder volume to form a first layer attached to the build surface.

5. The system of claim 4, wherein the control module is configured to:
successively reposition the build surface while activating the fluidizer to position the build surface within the powder volume while the powder is fluidized; and
control the energy applicator to apply energy to the top surface of the powder after each repositioning of the build surface within the powder volume for forming successive layers attached to the first layer, and optionally wherein the control module is configured to position the build surface at a depth beneath the top surface of the powder to define a layer thickness of a next layer.

6. The system of any preceding claim, wherein the movement system includes a piston (123) for vertically controlling a position of the build surface to control a depth of the build surface in a fluidized powder, and optionally wherein the movement system includes a positioner (125) connected between the build surface and the piston to allow the build surface to pivot relative to the piston.

7. The system of any preceding claim, wherein the movement system is configured to allow the build surface to be positioned and oriented in at least three axes within the powder volume.

8. A method of additive manufacturing, comprising:
fluidizing a powder to create fluidized powder;
moving a build surface within the fluidized powder to a build position and/or depth of powder relative to a top surface of the powder; and
applying energy to a surface of the powder to melt the powder and form a layer on the build surface or attached to an article that is attached to the build surface.

9. The method of claim 8, wherein fluidizing the powder includes continually fluidizing the powder during applying energy to the top surface of the powder, and/or wherein fluidizing the powder includes vibrating the powder at a first frequency to allow motion of the build surface within the powder, the method further comprising vibrating the powder at a second frequency after moving the build surface to smooth the top surface of the powder for applying energy to the top surface of the powder.

10. The method of claim 8 or 9, further comprising stopping fluidizing before applying energy to the top surface of the powder, and/or further comprising increasing fluidization during or after applying energy to the surface of the powder to increase convective heat transfer within the powder to provide a more uniform powder bed temperature.

11. The method of any of claims 8 to 10, further comprising reorienting the build surfaced in at least three axes within the powder after applying energy to build a part in at least a second build direction.

12. The method of any of claims 8 to 11, further comprising temperature regulating the fluidized powder.

13. A non-transitory computer readable medium, comprising computer executable instructions configured to cause a computer to execute a method, the method comprising:
activating a fluidizer to fluidize a powder in a powder volume to cause the poweder to be in a fluidized state; and
moving a build surface within the powder in the fluidized state to a build position.

14. The non-transitory computer readable medium of claim 13, further comprising:
activating an energy applicator to apply energy to a top surface of the powder to fuse the powder to form a first layer attached to the build surface;
activating the fluidizer or continuing to activate the fluidizer after deactivating the energy applicator;
moving the build surface within the powder in the fluidized state to a second build position;
activating the fluidizer or continuing to activate the fluidizer after moving the build surface to cause a top surface of the powder to be smooth; and
activating the energy applicator to apply energy to the smooth top surface of the powder to fuse the powder to form a second layer attached to the first layer.

15. The non-transitory computer readable medium of claim 14, further comprising:
until an additively manufactured part is complete, successively:
activating the fluidizer or continuing to activate the fluidizer;
moving the build surface within the powder in the fluidized state to a next build position;
activating the fluidizer or continuing to activate the fluidizer after moving the build surface to the next build position to cause a top surface of the powder to be smooth; and
activating the energy applicator to apply energy to the smooth top surface of the powder to fuse the powder to form a next layer attached to a previous portion of a part being built.
